(19) Europäisches Patentamt
European Patent Office
Office européen des brevets

(11) **EP 2 236 281 B1**

(12) **EUROPEAN PATENT SPECIFICATION**

(45) Date of publication and mention
of the grant of the patent:
**15.08.2012 Bulletin 2012/33**

(21) Application number: **09703567.9**

(22) Date of filing: **14.01.2009**

(51) Int Cl.:
**B32B 17/10** *(2006.01)*  **B29C 47/06** *(2006.01)*
**C03B 17/06** *(2006.01)*

(86) International application number:
**PCT/JP2009/050384**

(87) International publication number:
**WO 2009/093505 (30.07.2009 Gazette 2009/31)**

(54) **PROCESS FOR PRODUCING GLASS/RESIN COMPOSITE**

VERFAHREN ZUR HERSTELLUNG EINES GLAS/HARZ-VERBUNDES

PROCÉDÉ DE FABRICATION D'UN COMPOSITE VERRE/RÉSINE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **25.01.2008 JP 2008014430**

(43) Date of publication of application:
**06.10.2010 Bulletin 2010/40**

(73) Proprietor: **Asahi Glass Company, Limited**
**Chiyoda-ku**
**Tokyo 100-8405 (JP)**

(72) Inventor: **KONDO, Satoshi**
**Tokyo 100-8405 (JP)**

(74) Representative: **Müller-Boré & Partner**
**Patentanwälte**
**Grafinger Straße 2**
**81671 München (DE)**

(56) References cited:
**DE-A1- 10 040 640   JP-A- 6 206 246**
**JP-A- 6 340 029     JP-A- 63 233 022**
**JP-A- 2001 097 733  JP-A- 2005 014 563**
**JP-A- 2007 010 834  JP-T- 2002 534 305**
**JP-T- 2002 542 971  US-A1- 2002 136 907**
**US-B1- 6 502 423    US-B1- 6 815 070**

**Description**

TECHNICAL FIELD

The present invention relates to a process for producing a glass resin composite.

BACKGROUND ART

In recent years, the thickness of a glass plate to be used for applications such as a substrate for a display and a sensor/device cover, becomes thin. However, as a glass plate becomes thin, brittleness intrinsic to glass is elicited, and e.g. handling during transport or at the time of fabrication tends to be difficult.

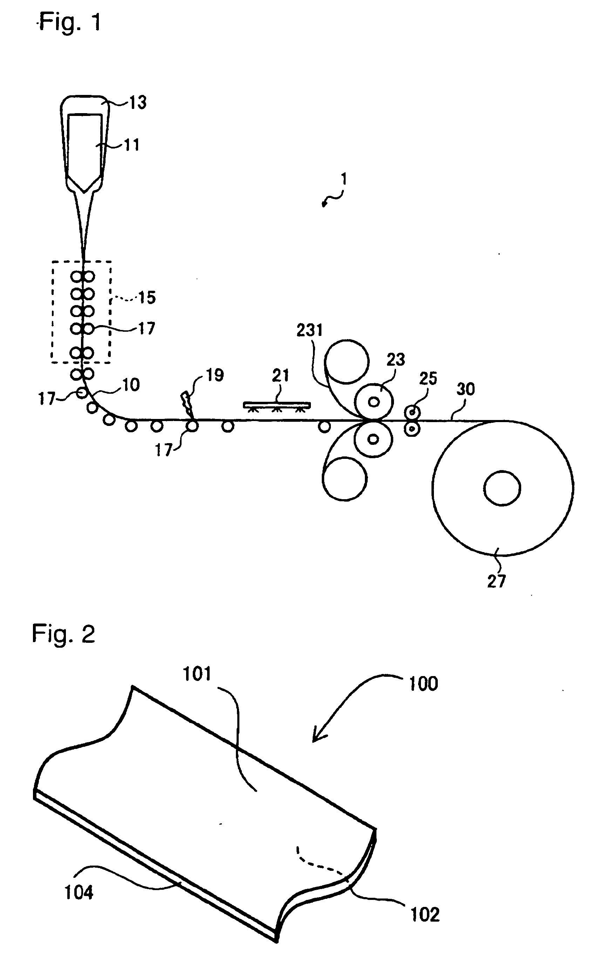

To solve this problem, a method of laminating a resin film on a glass ribbon has been proposed. Here, the glass ribbon will be described with reference to Fig. 2. A glass ribbon 100 means a continuous sheet-form glass shown in the Figure, and has plane main surfaces of a first surface 101 and a second surface 102, and two edge surfaces 104 constituting planes in the glass ribbon thickness direction. The edge surfaces 104 become cut surfaces after the borders (both edges in the width direction) are cut.

As a process for producing a glass laminate, Patent Document 1 discloses a process for producing a glass laminate, which comprises producing a glass film e.g. by a float process, a redraw process, a fusion process or a downdraw process, and laminating a plastic film in the middle of the production step.

Further, for example, Patent Document 2 discloses a process for producing a plastic film/glass film laminate such that in a step for producing a glass film having a specific thickness, a plastic film having an adhesive layer to adhere to glass and having a specific thickness and specific performance, is continuously laminated on and bonded to a glass film being wound on a roller in a predetermined thickness in a state where the adhesive layer to adhere to glass corresponds to the glass film, and the laminate is continuously wound on a tubular bobbin.

Further, for example, Patent Document 3 discloses a process for producing a glass/plastic composite film, which comprises, in a downdraw process, a step of producing a glass film having a predetermined thickness at a predetermined draw rate, a step of connecting such glass films in series, a step of applying preliminary treatment to the surface of the glass film, and a step of directly applying a polymer layer in a predetermined thickness in a liquid phase.

Still further, for example, Patent Document 4 discloses a production process such that a glass substrate is covered with first and second resin substrates each having an area sufficient to cover the glass substrate, made of substantially the same resin, and on that occasion, the glass substrate is disposed so as to provide an adhesion margin along the entire periphery of the glass substrate on each of the first and second resin substrates, and both the resin substrates are overlaid along the adhesion margins of the resin substrates, followed by sealing by solvent bonding.

Patent Document 5 discloses a method and a device for producing glass panes.

According to the production method, a glass strip is provided with a protective layer in a coating installation directly after being drawn, to impart additional and mechanical stability to the glass strip and to protect its surface before the strip is deflected in a deflecting unit. After deflection, the glass band is cut into individual panes in a cutting installation.

Patent Document 1: JP-A-2001-97733
Patent Document 2: JP-A-2001-113631
Patent Document 3: JP-A-2002-534305
Patent Document 4: JP-A-2007-10834
Patent Document 5: DE10040640 A1

DISCLOSURE OF THE INVENTION

PROBLEM TO BE SOLVED BY THE INVENTION

By the production processes disclosed in Patent Documents 1 and 2, the glass strength retention and the handling efficiency are considered to be improved as compared with a glass ribbon not covered with a resin. However, as the glass edge surfaces are not protected, the glass strength is insufficient.

Further, in the process as disclosed in Patent Document 3, since the glass ribbon is immersed in a resin in a liquid phase, it is considered that the resin is attached also to the glass ribbon edge surfaces, but it is considered that the resin will not be attached to the borders (edge portions) between the edge surface and the main surface of the glass ribbon by the influence of the surface tension of the resin liquid. In such a case, the strength at the glass ribbon edge surfaces is insufficient. Further, in this process, it is required to cut the edges of the glass ribbon having a resin layer for the purpose of adjusting the width when the composite film is shipped as a product. Accordingly, at the time of shipping, the glass ribbon edge surfaces are already not covered with a resin and are exposed. Thus, it does not have sufficient transportability and handling efficiency. Further, when the glass ribbon is processed (fabricated) by a person who purchased it, of course, the glass ribbon edge surfaces are exposed, and accordingly the glass ribbon is likely to break at the time of fabrication. That is, it has low fabrication properties (easiness of fabrication).

Further, the process disclosed in Patent Document 4 is a production process which comprises disposing a glass substrate so as to provide an adhesion margin around the entire periphery of the glass substrate, and overlaying the resin substrates along the adhesion margins, followed by sealing by solvent bonding. That is, the process disclosed in Patent Document 4 is based on a premise that glass substrates are treated one by one, and by this process, it is not possible to continuously produce glass resin composites.

The present invention has been made to solve the above problem. That is, its object is to provide a process for producing a glass resin composite which has sufficient transportability, handling efficiency and fabrication property even when the glass is very thin, capable of continuous production (hereinafter referred to as continuous operation).

MEANS TO SOLVE THE PROBLEM

The present inventor has conducted extensive studies to solve the above problem and accomplished the present invention.

The present invention provides the following process for producing a glass resin composite.

(1) A process for producing a glass resin composite, which comprises a forming step of forming molten glass to obtain a glass ribbon, and an edge cutting step of cutting both edges in the width direction of the glass ribbon, which further comprises a resin coating forming step of making the glass ribbon after the edge cutting step pass through a die of a molten resin extruder to apply a molten resin on its main surfaces and edge surfaces to form a resin coating, and/or a film laminating step of sandwiching the glass ribbon after the edge cutting step between two resin films wider than the glass ribbon and bonding both edges in the width direction of the resin films for covering.

(2) The process for producing a glass resin composite according to the above (1), wherein the viscosity of the molten resin immediately before extruded from the die of the molten resin extruder, is from $10^{-1}$ Pa·s to $10^3$ Pa·s at a shear rate of 500 (1/s).

(3) The process for producing a glass resin composite according to the above (1) or (2), wherein $(W_R - W_G)/2 \geqq T_G + 0.1$ is satisfied, where $W_G$ (mm) is the width and $T_G$ (mm) is the thickness of the glass ribbon after the edge cutting step, and $W_R$ (mm) is the width of the resin film.

(4) The process for producing a glass resin composite according to any one of the above (1) to (3), wherein the resin films are bonded in the film laminating step by heat sealing or by an adhesive.

EFFECTS OF THE INVENTION

According to the present invention, it is possible to continuously produce a glass resin composite having sufficient transportability, handling efficiency and fabrication property even when the glass is very thin without impairing chemical resistance, abrasion resistance, gas barrier properties, etc. of the glass.

BRIEF DESCRIPTION OF THE DRAWINGS

Fig. 1 is a view schematically illustrating a production line in Examples.
Fig. 2 is a view schematically illustrating a glass ribbon in the present invention.

MEANINGS OF SYMBOLS

1: production line
10: glass ribbon
11: fusion pipe
13: molten glass
15: forming/annealing zone
17: roller
19: laser cutting apparatus
21: cleaning apparatus
23: nip roll
231: film
25: nip roll
27: bobbin
30: glass resin composite
100: glass ribbon
101: main surface
102: main surface
104: edge surface

BEST MODE FOR CARRYING OUT THE INVENTION

The present invention will be described below.
The present invention provides a process for producing a glass resin composite, which comprises a forming step of forming molten glass to obtain a glass ribbon, and an edge cutting step of cutting both edges in the width direction of the glass ribbon, which further comprises a resin coating forming step of making the glass ribbon after the edge cutting step pass through a die of a molten resin extruder to apply a molten resin on its main surfaces and edge surfaces to form a resin coating, and/or a film laminating step of sandwiching the glass ribbon after the edge cutting step between two resin films wider than the glass ribbon and bonding both edges in the width direction of the resin films for covering.

That is, the present invention includes the following embodiments (a) to (d).

(a) A process for producing a glass resin composite, which comprises the forming step, the edge cutting step and the resin coating forming step in this order.
(b) A process for producing a glass resin composite, which comprises the forming step, the edge cutting step and the film laminating step in this order.
(c) A process for producing a glass resin composite, which comprises the forming step, the edge cutting step, the resin coating forming step and the film laminating step in this order.

(d) A process for producing a glass resin composite, which comprises the forming step, the edge cutting step, the film laminating step and the resin coating forming step in this order.

Now, the forming step in the present invention will be described.

The forming step is a step of forming molten glass to obtain a glass ribbon.

The type of molten glass is not particularly limited. It may, for example, be molten glass having a composition to obtain conventional soda lime glass, borosilicate glass, alkali-free glass or the like. Among them, preferred is alkali-free glass from a viewpoint that a glass ribbon to be obtained is excellent in strength and chemical durability. Further, preferred is one from which a plate-form glass having a coefficient of linear expansion of at most $500 \times 10^{-7}/°C$ is obtained, more preferred is one from which a plate-form glass having a coefficient of linear expansion of about $200 \times 10^{-7}/°C$ is obtained in view of availability. A plate glass obtained by separating a resin coating or a resin film from the glass resin composite of the present invention can be preferably used for a substrate of e.g. a display device, and in such a case, when a plate glass having a coefficient of linear expansion of at most $500 \times 10^{-7}/°C$ is obtained, its thermal deformation is small in a heating step in production of a display device, and accordingly fine patterning corresponding to a desired pixel size will be carried out relatively easily.

The coefficient of linear expansion is one as defined in JIS R3102 (1995).

The method of obtaining molten glass is also not particularly limited. For example, a conventional method may be mentioned. Specifically, it may, for example, be a method of melting a powdery glass material in a glass melting furnace at a temperature of from about 1,100 to about 1,500°C.

The method of forming such molten glass is also not particularly limited. For example, a known method to obtain a known glass ribbon may be applied. Specifically, for example, a float process, a fusion process, a downdraw process, a slot down process or a redraw process may be applied.

However, the method is limited to a forming method such that it is required to cut edges of the glass ribbon after the forming step. For example, it may be a method of forming molten glass while edges of the glass ribbon are held by rolls. For example, in the known fusion process, edges of the glass ribbon immediately after forming and before completely solidified are pulled to both sides in the width direction by jigs called pulling rolls to adjust the thickness and the width of the glass ribbon. When the glass ribbon is held by rolls in such a manner, scars are made on the surface of the held portion at the edges of the glass ribbon, and the quality as a product is decreased, and accordingly it is necessary to cut the portion off.

The thickness, the length, the width, etc. of the glass ribbon to be obtained by such a method is not particularly limited.

The thickness is preferably from 10 to 300 $\mu$m, more preferably from 50 to 200 $\mu$m. If the glass ribbon is too thin, the strength tends to be too low, and subsequent formation of a resin coating and/or a resin film will be difficult. Further, if it is too thick, flexibility of the glass itself will be lost, and accordingly it will be difficult to wind the glass resin composite to be obtained by the present invention into a roll.

The length of the glass ribbon is preferably from 3 to 300 m, more preferably from 10 to 100 m. A length of from 3 to 300 m is suitable for continuous production. If it is too long, the diameter of a roll obtained by winding tends to be too large and it will be difficult to handle the roll.

The width is preferably from 10 to 2,000 mm, more preferably from 100 to 1,800 mm. If the glass ribbon is too narrow, its application will be limited. Further, if it is too broad, production of a film to be laminated will be difficult, and it will be difficult to obtain such a film.

It is preferred to continuously form a glass ribbon by such a forming step, which is continuously supplied to the edge cutting step.

Now, the edge cutting step in the present invention will be described.

The edge cutting step is a step of cutting both edges in the width direction of the glass ribbon.

In the edge cutting step, the method of cutting both edges in the width direction of the glass ribbon is not particularly limited. For example, cutting by a known method is possible. Specifically, a cutting method employing a known laser may, for example, be mentioned. Cutting by laser is preferred since the strength of the edges of the glass ribbon to be obtained is maintained. Further, edge surfaces of the glass ribbon obtained by cutting laser are slightly round, and the borders (edges) between the edge surface and the main surface hardly form an acute angle or a right angle, such being favorable. If the border forms an acute angle or a right angle, a resin film or a resin coating to be formed later may be broken by the acute border, such being unfavorable. As another cutting method, a method of pressing a wheel cutter to make a sharp scar on the glass surface and immediately deforming that portion continuously or locally to expand the scar made on the surface for cutting thereby to cut the glass ribbon. At the edges of the glass ribbon, scars are likely to be made on the surface e.g. by holding by rolls in the forming step. The edges to be cut are portions including such traces of the rolls, and are portions of approximately 2 to 200 mm from ends in the glass ribbon width direction.

After the edges of the glass ribbon are cut e.g. by laser, the glass ribbon is washed and dried as the case requires. Such steps may be carried out by known methods.

It is preferred to continuously supply the glass ribbon having both edges cut, by continuously cutting both edges in the width direction of the glass ribbon in such an edge cutting step, to the subsequent step.

Now, the resin coating forming step in the present invention will be described.

The resin coating forming step is a step of making the glass ribbon after the edge cutting step pass through a die of a molten resin extruder to apply a molten resin on its main surfaces and edge surfaces to form a resin coating.

Here, "the glass ribbon after the edge cutting step" means a glass ribbon having edges cut in the edge cutting step or a glass ribbon obtained by subjecting the glass ribbon having edges cut to the after-mentioned film laminating step.

Such a "glass ribbon after the edge cutting step" will sometimes be referred to as "a glass ribbon α" in the resin coating forming step for convenience.

In the resin coating forming step, a resin coating made of a molten resin is formed on the surface of the glass ribbon α by using a molten resin extruder.

The molten resin extruder is not particularly limited so long as it has a die through which the glass ribbon α is made to pass to apply a molten resin on its main surfaces and edge surfaces of the glass ribbon α to form a resin coating, and the extruder may be known one.

For example, an extruder may be mentioned, which has a crosshead die having a rectangular cross-section as the die, through which the glass ribbon α is made to pass to apply a molten resin on its surface.

After the glass ribbon passed through the die, the resin coating is solidified, for example, by being left to stand at room temperature. In a case where the resin coating is formed continuously, the resin coating can be solidified by adjusting the distance and the time until the next step. In a case where the distance or the time until the next step cannot be secured, the resin coating formed after the glass ribbon passed through the die may be cooled by a known cooling means.

Further, the viscosity of the molten resin when a coating is formed on the surface of the glass ribbon α by the die such as a crosshead die, i.e. the viscosity of the molten resin immediately before extruded from the die of the molten resin extruder, is preferably from $10^{-1}$ Pa·s to $10^3$ Pa·s, more preferably from $5.0 \times 10^{-1}$ Pa·s to $5.0 \times 10^2$

Pa·s, further more preferably from $8.0 \times 10^{-1}$ Pa·s to $3.0 \times 10^2$ Pa·s. If the viscosity of the molten resin is too low, deformation of the resin immediately after extruded from the die is significant, and shaping will be difficult. On the other hand, if the viscosity is too high, it is necessary to increase the pressure of the molten resin in the die to extrude it and as a result, the discharge pressure of the molten resin may be too high, thereby to break the glass ribbon a. When the viscosity of the molten resin is within the above range, the molten resin will be favorably applied to the surface of the glass ribbon α.

The viscosity of the molten resin means a value measured by a rheometer at a shear rate = 500 (1/s) assuming the die set temperature at the time of extruding the molten resin is the set temperature at the time of the sample measurement.

The thickness of the resin coating formed on the surface of the glass ribbon α is not particularly limited, and it may be at such a level that the glass resin composite will not easily be broken by e.g. transport, and the surface of the glass ribbon α can be protected. Specifically, the thickness of the resin coating is preferably from 1 to 500 μm, more preferably from 5 to 300 μm, furthermore preferably from 10 to 150 μm.

Further, the thickness of the resin coating is preferably at least one tenth, more preferably at least one eighth, furthermore preferably at least one fifth of the thickness of the glass ribbon α at the main surfaces and the edge surfaces of the glass ribbon α. If it is too thin, no sufficient covering effect will be obtained, and the strength of the glass ribbon may be insufficient. The upper limit of the thickness is not particularly limited, but if it is unnecessarily thick, the cost will increase, and accordingly it is preferably at most five times the thickness of the glass ribbon.

The thickness of the resin coating means the value measured by using a micrometer in such a manner that the resin coating is formed on the surface of the glass ribbon α, followed by cooling to room temperature, and then the resin forming the coating is separated from the surface of the glass ribbon α, and the thickness of the resin is measured.

Further, the resin to be used for forming the resin coating by the molten resin extruder is not particularly limited so long as it can impart toughness to the glass ribbon α. It may be selected depending on e.g. the heat resistance, the chemical resistance and transparency required in accordance with the application of the glass resin composite obtained by the present invention. It may, for example, be a polyester resin, a polycarbonate resin, a polyethersulfone resin, a polyolefin resin, a polyvinyl alcohol resin, a silicone resin, a polyamide resin, an acrylic resin, a polystyrene resin, a triacetylcellulose resin, a polyimide resin, a polyvinyl chloride resin or a fluororesin. Further, a copolymer thereof or one having an additive such as a filler incorporated may also be mentioned.

The glass ribbon α after the edge cutting step is preferably immediately subjected to the resin coating forming step.

That is, in the case of the above embodiment (a) or (c), it is preferred that after the edges of the glass ribbon are cut by e.g. a laser cutting apparatus in the edge cutting step, the resin is applied to the surface to form the resin coating as quick as possible. If time passes after cutting for a while or if a place where the edges are cut and a place where the resin coating is formed are distant from each other to some extent or more, the possibility of the surface of the glass ribbon having scars will increase, and the possibility of formation of a resin coating on the surface having scars will increase. If the surface has scars in such a manner, the glass ribbon is likely to be broken. The time after cutting by e.g. a laser cutting apparatus until the resin coating is formed is, for example, preferably at most 600 seconds, more preferably at most 300 seconds. Further, the distance between a portion where the laser cutting apparatus is disposed and a portion where the resin coating is formed is, for example, preferably at most 20 m, more preferably at most 10 m.

Accordingly, it is preferred that cutting of the glass ribbon edges in the edge cutting step and formation of the resin coating in the resin coating forming step are preferably carried out continuously. As in the embodiment described hereinafter with reference to Fig. 1, it is preferred to continuously cut the glass ribbon edges while the glass ribbon formed in the forming step is transported by rollers, and further to form a resin coating. Further, the continuous (ribbon-shape) glass resin composite having the resin coating formed thereon is preferably transported by rollers and wound into a roll. Further, the number of rollers present between the portion where the laser cutting apparatus is disposed and the portion where the resin coating is formed is preferably as small as possible, and for example, it is preferably at most 100, more preferably at most 50.

Now, the film laminating step in the present invention will be described.

The film laminating step is a step of sandwiching the glass ribbon after the edge cutting step between two resin films wider than the glass ribbon and bonding both edges in the width direction of the resin films for covering.

Here, "the glass ribbon after the edge cutting step" means a glass ribbon having edges cut in the edge cutting step or a glass ribbon obtained by subjecting the glass ribbon having edges cut to the resin film forming step.

Such a "glass ribbon after the edge cutting step" will sometimes be referred to as "a glass ribbon $\beta$" in the film laminating step for convenience.

In the film laminating step, the glass ribbon $\beta$ is sandwiched between two resin films wider than the glass ribbon $\beta$ in the thickness direction, and both edges in the width direction of the two resin films are bonded to cover the surface (main surfaces and edge surfaces) of the glass ribbon $\beta$.

The type of the resin film is not particularly limited. For example, a film made of the same resin as the resin coating may be used. The types of the two resin films may be the same or different.

The thickness of the resin film is also not particularly limited, and it may be such a level that the glass resin composite will not easily be broken by e.g. transport, and the surface of the glass ribbon $\beta$ can be protected. The thickness of the resin film is preferably from 1 to 500 $\mu$m, more preferably from 5 to 300 $\mu$m, furthermore preferably from 10 to 150 $\mu$m. The thickness of the resin film is preferably at least one tenth, more preferably at least one eighth, furthermore preferably at least one fifth of the thickness of the glass ribbon $\beta$. Further, it is preferably at most 5 times, more preferably at most 3 times, furthermore preferably at most 2 times. If the resin film is too thin, its effect of protecting the glass ribbon $\beta$ is insufficient in some cases. Further, if it is too thick, the modulus of the resin film tends to be too great, and the glass ribbon $\beta$ may be broken.

The thickness of the resin film means the value measured by a micrometer with respect to the resin film removed from the surface of the glass ribbon $\beta$.

Further, the thickness of the resin film is not particularly limited so long as the glass ribbon $\beta$ can be covered by two resin films. The two resin films may have different widths, but it is preferred that their widths are substantially the same and wider than the total of the width and the thickness of the glass ribbon $\beta$. That is, $W_G + T_G < W_R$ is preferably satisfied, where $W_G$ (mm) is the width and $T_G$ (mm) is the thickness of the glass ribbon $\beta$, and $W_R$ (mm) is the width of the resin film, whereby the two resin films will easily be bonded.

Further, it is preferred that $W_G$, $W_R$ and $T_G$ satisfy the following relation in both the two resin films.

$$\theta \geq (W_R - W_G)/2 \geq T_G + \gamma$$

In the above formula, $\gamma$ is at least 0.1 mm, preferably at least 0.5 mm, more preferably at least 1.0 mm, furthermore preferably at least 2.0 mm. Accordingly, the width $W_R$ (mm) of the resin film should satisfy $(W_R - W_G)/2 \geq T_G + 0.1$ relative to the width $W_G$ (mm) and the thickness $T_G$ (mm) of the glass ribbon $\beta$. When $\gamma$ is within the above range, the two resin films will more easily be bonded, and they will be strongly bonded.

Further, $\theta$ is not particularly limited, but is preferably at most 100 mm, more preferably at most 50 mm, furthermore preferably at most 25 mm. If $\theta$ is too great, bonding of the two resin films will rather be difficult.

In the film laminating step, the glass ribbon $\beta$ is sandwiched in the thickness direction by such resin films. That is, the main surface of one resin film is brought into contact with one main surface of the glass ribbon $\beta$. On that occasion, it is preferred that the entire surfaces of the glass ribbon $\beta$ and the resin film are contact bonded. Then, the main surface of the other resin film is brought into contact with the other main surface of the glass ribbon $\beta$ in the same manner (similarly, it is preferred that the entire surfaces are contact bonded). Here, the resin film can be brought into contact with the main surface of the glass ribbon $\beta$ by using, for example, nip rolls.

In a case where the surface of the glass ribbon $\beta$ is covered with the resin film, the resin film may be bonded to at least one of the two main surfaces of the glass ribbon $\beta$. In a case where a glass resin composite prepared by bonding the resin film to the main surface of the glass ribbon $\beta$ is used, there may be a case where the two resin films on both sides are separated, a case where only one resin film on one side is separated and one on the other side is left, or a case where the two resin films on both sides are left, and when the glass resin composite is used as a substrate for a device in a state where at least one of the resin films is left, it is preferred that the resin film and the main surface of the glass ribbon β are bonded. They can be bonded, for example, by bringing a resin film having a bonding/adhesion treatment applied to its surface into contact with the glass ribbon β. The bonding/adhesion treatment is a treatment to apply a primer, an acrylic adhesive, a silicone adhesive, a urethane adhesive, a thermoplastic adhesive, a UV curable adhesive or the like to the surface of a resin film.

Further, it is preferred to sandwich the glass ribbon β between the resin films so that the center portion in the width direction of the glass ribbon β and the center portion in the width direction of the resin films are in contact with each other, whereby the lengths of both edges of the resin films, which are not in contact with the glass ribbon β, are equal, and bonding of the resin films will be easy.

The method of bonding edges of the two resin films is not particularly limited. Bonding by sandwiching the two resin films by e.g. nip rolls is preferred. Bonding by heat sealing or by an adhesive is preferred. In a case where the resin film is made of a thermoplastic resin, bonding by heat sealing is preferred, whereby bonding can be carried out more simply and securely. Further, in a case where the main surface of the resin film is subjected to the bonding/adhesion treatment, the films can be bonded only by pressure bonding the edges. Further, a layer for bonding/adhesion may be preliminarily formed on portions of the resin films protruding from the glass ribbon, whereby the resin films are bonded.

As described above, by bonding edges of the two resin films, the thickness of the resin film at the edges of the glass ribbon β is thicker than the thickness of the resin film on the main surface of the glass ribbon β. Accordingly, the edges of the glass ribbon β can sufficiently be protected.

The glass ribbon β after the edge cutting step is preferably immediately subjected to the film laminating step.

That is, in the case of the above embodiment (b) or (d), it is preferred that after the edges of the glass ribbon are cut by e.g. a laser in the edge cutting step, the surface is covered with the resin films as quick as possible. If time passes after cutting for a while or if a place where the edges are cut and a place where the glass ribbon is covered with the resin films are distant from each other, the possibility of the surface of the glass ribbon having scars will increase, and the possibility of covering the surface having scars with the resin films will increase. If the surface has scars in such a manner, the glass ribbon is likely to be broken. The time after cutting by e.g. laser until covering with the resin films is, for example, preferably at most 600 seconds, more preferably at most 300 seconds. Further, the distance between a portion where the laser cutting apparatus is disposed and a portion where the resin film covering apparatus is disposed is, for example, preferably at most 20 m, more preferably at most 10 m.

Accordingly, it is preferred that cutting of the glass ribbon edges in the edge cutting step and covering with the resin films in the film laminating step are carried out contiguously. As in the embodiment described hereinafter with reference to Fig. 1, it is preferred to continuously cut the glass ribbon edges while the glass ribbon formed in the forming step is transported by rollers and further to cover the glass ribbon with the resin films. Further, the continuous (ribbon-shape) glass resin composite covered with the resin films is preferably transported by rollers and wound into a roll. Further, the number of rollers present between the portion where the laser is disposed and the portion where the resin film covering apparatus is disposed is preferably as small as possible, and for example, it is preferably at most 100, more preferably at most 50.

Further, in the case of the above embodiment (c) also, it is preferred that after the resin coating is formed in the resin coating forming step, the surface is covered with the resin films as quick as possible. The resin films are formed to protect the resin coating in some cases, and it is preferred to cover the resin coating with the resin films before the resin coating gets scars.

Accordingly, it is preferred that cutting of the glass ribbon edges in the edge cutting step, formation of the resin coating in the resin coating forming step and covering with the resin films in the film laminating step are continuously carried out. As in the embodiment described hereinafter with reference to Fig. 1, it is preferred that while the glass ribbon formed in the forming step is transported by rollers, the glass ribbon edges are continuously cut, and then the resin coating is formed, and then the glass ribbon is covered with the resin films. Further, the continuous (ribbon-shape) glass resin composite covered with the resin films is preferably transported by rollers and wound into a roll.

In the embodiment shown in Fig. 1, a forming/cooling zone is provided below a fusion pipe 11, a glass ribbon which passed through this zone flows along rollers 17, are transported to a horizontal direction and subjected to the next step. However, it is preferred to dispose the next step further below the forming/cooling zone and to transport the glass ribbon downward, not to transport the glass ribbon in the horizontal direction in the forming/cooling zone as described above. When the glass ribbon is transported in the vertically downward direction after forming, only the edges of the glass ribbon are supported by rollers 17, and accordingly the area of contact between the glass ribbon and the rollers is very small. Further, the glass ribbon is in the vertical direction, the glass ribbon is less likely to get scars by the rollers. If the glass ribbon is transported in the horizontal direction as in the embodiment shown in Fig. 1, the glass ribbon may get scars at the contact point between the glass ribbon and the rollers. Rollers to transport the glass ribbon in the horizontal direction are usually rollers which support the entire surface of the glass ribbon.

The glass resin composite obtainable by the present invention has substantially no scars on the surface and the edge surfaces of the glass ribbon itself, and is strong against physical flexural stress. Accordingly, it is possible to continuously produce a ribbon-shape (continuous) glass resin composite and wind it into a roll at the same time. The glass resin composite in the roll form is not only advantageous because only a small space for storage is required when it is further processed (for example, it is used for a substrate of a device by a third party who purchased it), but also improves the productivity since a device production step by a roll to roll method may be employed.

For example, while the glass resin composite in the roll form obtained by the present invention is released and continuously supplied to a photolithography step, a thin film transistor (TFT) is formed on the surface of the glass resin composite in the photolithography step, and then the glass resin composite is cut into a desired length to obtain a glass substrate provided with TFT.

Further, in the present invention, by bonding portions of the two resin films, protruding from both edges of the glass ribbon, a glass resin composite can be obtained. Further, only by cutting the protruding portion in the glass resin composite by a third party, the resin films can easily be removed from the glass ribbon as the case requires. In such a case, in the glass ribbon in the embodiment having the resin coating, the resin coating itself is heat sealed to the glass ribbon. Accordingly, in any of the embodiment having the resin films, the embodiment having the resin coating and the embodiment having both the resin films and the resin coating, the glass resin composite can be produced by bonding only portions protruding from both edges of the glass ribbon, and it is not necessary to use an adhesive or a tackifier to obtain the glass resin composite, whereby flying of compounds contained in the adhesive or the tackifier in the production process can be prevented. Further, there is no possibility of contamination in the same manner also in e.g. a production process by a third party who purchased the glass resin composite.

EXAMPLES

EXAMPLE 1

The present invention was carried out continuously by a production line 1 shown in Fig. 1 to obtain a glass resin composite in the roll form.

Explanation is made with reference to Fig. 1.

Molten glass 13 was poured into a groove at the top of a fusion pipe 11, and by a known fusion process of continuously forming a thin plate-shape glass plate, a glass ribbon 10 (AN 100, manufactured by Asahi Glass Company, Limited) having a coefficient of linear expansion of $200 \times 10^{-7}/°C$ and a thickness of 100 $\mu$m was continuously formed at a rate of 3 m per minute.

Both edges of the glass ribbon 10 were held by rollers 17 in a forming/annealing zone 15 disposed below the fusion pipe 11. Further, the held portions were continuously cut by a laser cutting apparatus 19 to adjust the width of the glass ribbon 10 to 700 mm.

Then, the surface of the glass ribbon 10 was washed by a washing apparatus 21, and films 231 made of a polycarbonate having a width of 710 mm and a thickness of 100 $\mu$m were contact bonded on both sides of the glass ribbon by nip rolls 23 in a laminating apparatus while the films were synchronized with the flow of the glass ribbon 10. Here, the center in the width direction of the glass ribbon 10 and the center in the width direction of the films 231 were in contact with each other. Further, the surface temperature of the nip rolls 23 was set at 150°C.

Then, edges of the two films 231 sandwiching the glass ribbon 10 were heat sealed by nip rolls 25 in a heat seal apparatus having the surface temperature set at 300°C. Then, the obtained glass resin composite 30 was wound into a roll using a bobbin 27 having a diameter of 800 mm.

As a result, it was possible to continuously wind the glass resin composite 30 having a length of 40 m into a roll in an unscarred state.

EXAMPLE 2

One of the two films 231 made of a polycarbonate used to sandwich the glass ribbon 10 in Example 1 was changed to a polycarbonate film having an acrylic adhesive layer formed on its surface. The total thickness of the acrylic adhesive layer and the polycarbonate film was 110 $\mu$m. Further, in Example 1, the resin films 231 were heat sealed by being sandwiched between the nip rolls 25 set at 300°C, but in Example 2, the temperature of the nip rolls 25 was set at room temperature. Except for the above, the same operation as in Example 1 was carried out.

In the above method, the glass resin composite in which the entire main surface of one resin film was bonded to the main surface of the glass ribbon 10, and the edges of the two films were adhered by the adhesive layer, was obtained.

As a result, it was possible to continuously wind a glass resin composite 30 having a length of 40 m into a roll in an unscarred state.

EXAMPLE 3

Instead of the two films 231 made of a polycarbonate having a width of 710 mm and a thickness of 100 $\mu$m used in Example 1, a film made of a polyester having a width of 710 mm and a thickness of 50 $\mu$m, and a film made of a polyester having a width of 710 mm and a

thickness of 50 μm and having a silicone adhesive layer formed on both edges each in a width of 5 mm, were used. Further, in the same manner as in Example 2, the surface temperature of the nip rolls 25 was set at room temperature. Except for the above, the same operation as in Example 1 was carried out.

By such a method, a glass resin composite in the roll form was obtained.

As a result, it was possible to continuously wind a glass resin composite 30 having a length of 40 m into a roll in an unscarred state.

EXAMPLE 4

The width of the glass ribbon 10 which was 700 mm in Example 1 was changed to 100 mm. Further, instead of the films 231 made of a polycarbonate and the nip rolls 23 used in Example 1, a resin coating was formed uniformly in a thickness of 60 μm on the surface (main surfaces and edge surfaces) of the glass ribbon 10 by using an extruder equipped with a crosshead die. The resin coating was formed by applying a thermoplastic polyimide resin (viscosity at a shear rate of 500 (1/s): 300 Pa· s) molten at 400°C to the surface of the glass ribbon 10. Except for the above, the same operation as in Example 1 was carried out.

By such a method, a glass resin composite in the roll form, in which the surface of the glass ribbon was covered with the polyimide resin, was obtained.

As a result, it was possible to continuously wind a glass resin composite 30 having a length of 40 m into a roll in an unscarred state.

COMPARATIVE EXAMPLE 1

The same operation as in Example 1 was carried out except that polycarbonate films having a width of 700 mm were used instead of the polycarbonate films 231 having a width of 710 mm used in Example 1.

That is, edge surfaces of the glass ribbon 10 were not covered with the resin films.

By such a method, a glass resin composite in the roll form was obtained.

As a result, it was possible to continuously wind a glass resin composite 30 having a length of 40 m into a roll in an unscarred state. However, several scars were formed on the edges, and cracks appeared from the scars. The number of portions with scars was 2.5 on average per 10 m in the length direction of the glass ribbon.

COMPARATIVE EXAMPLE 2

The same operation as in Example 1 was carried out except that no resin films were bonded.

It was attempted to wind the glass ribbon into a roll, but the glass ribbon was broken in the middle of winding, and it was not possible to continuously wind the glass ribbon even in a length of 3 m.

As described above, in the case of the production process in Comparative Example 1, the glass ribbon got scars, and in the case of the production process in Comparative Example 2, it was not possible to wind the glass ribbon into a roll, whereas in the case of Examples 1 to 4, it was possible to wind a continuous glass resin composite into a roll in an unscarred state.

That is, according to the production process of the present invention, even an extremely thin glass ribbon having a thickness of 100 μm can be subjected to continuous operation while it has sufficient transportability, handling efficiency and fabrication property without impairing the performance of the glass.

INDUSTRIAL APPLICABILITY

The present invention is effective for production of a glass resin composite having sufficient transportability, handling efficiency and fabrication property even when the glass is extremely thin, and is utilized for a glass resin composite to be used for applications such as a substrate for a display and a sensor/device cover.

The entire disclosure of Japanese Patent Application No. 2008-14430 filed on January 25, 2008 including specification, claims, drawings and summary is incorporated herein by reference in its entirety.

**Claims**

1.  A process for producing a glass resin composite (30), which comprises
    a forming step of forming molten glass (13) to obtain a glass ribbon (10), and
    an edge cutting step of cutting both edges in the width direction of the glass ribbon (10) after the forming step,
    which further comprises
    a resin coating forming step of making the glass ribbon (10) after the edge cutting step pass through a die of a molten resin extruder to apply a molten resin on its main surfaces and edge surfaces to form a resin coating, and/or
    a film laminating step of sandwiching the glass ribbon (10) after the edge cutting step between two resin films (231) wider than the glass ribbon (10) and bonding both edges in the width direction of the resin films (231) for covering.

2.  The process for producing a glass resin composite (30) according to Claim 1, wherein the viscosity of the molten resin immediately before extruded from the die of the molten resin extruder, is from $10^{-1}$ Pa·s to $10^{3}$ Pa·s at a shear rate of 500 (1/s).

3.  The process for producing a glass resin composite (30) according to Claim 1 or 2, wherein $(W_R-W_G)/2 \geq T_G+0.1$ is satisfied, where $W_G$ (mm) is the width and $T_G$ (mm) is the thickness of the glass ribbon (10) after the edge cutting step, and $W_R$ (mm) is the width of the resin film.

4. The process for producing a glass resin composite (30) according to any one of Claims 1 to 3, wherein the resin films (231) are bonded in the film laminating step by heat sealing or by an adhesive.

## Patentansprüche

1. Verfahren zum Herstellen eines Glas-Harz-Verbunds (30), das umfasst:

einen Bildungsschritt des Bildens von geschmolzenem Glas bzw. Glasschmelze (13), um ein Glasband (10) zu erhalten, und einen Rand- bzw. Kantenschneideschritt des Schneidens beider Ränder bzw. Kanten in der Breitenrichtung des Glasbands (10) nach dem Bildungsschritt, das weiter umfasst einen Harzbeschichtungsbildungsschritt des Bewirkens, dass das Glasband (10) nach dem Rand- bzw. Kantenschneideschritt durch ein Werkzeug eines Harzschmelzeextruders tritt, um ein geschmolzenes Harz bzw. eine Harzschmelze auf seine Hauptflächen bzw. -oberflächen und Rand- bzw. Kantenflächen bzw. -oberflächen aufzubringen, um eine Harzbeschichtung zu bilden, und/oder einen Filmlaminierschritt des Anordnens des Glasbands (10) nach dem Rand- bzw. Kantenschneideschritt zwischen zwei Harzfilmen (231), breiter als das Glasband (10), und Bonden beider Ränder bzw. Kanten in der Breitenrichtung des Harzfilms (231) zur Abdeckung.

2. Verfahren zum Herstellen eines Glas-Harz-Verbunds (30) nach Anspruch 1, wobei die Viskosität der Harzschmelze unmittelbar vor dem Extrudieren von bzw. aus dem Werkzeug des Harzschmelzeextruders von $10^{-1}$ Pa·s bis $10^3$ Pa·s mit bzw. bei einer Scherrate bzw. -geschwindigkeit von 500 (1/s) beträgt.

3. Verfahren zum Herstellen eines Glas-Harz-Verbunds (30) nach Anspruch 1 oder 2, wobei $(W_R-W_G)/2 \geq T_G+0{,}1$ erfüllt ist, wo $W_G$ (mm) die Breite und $T_G$ (mm) die Dicke des Glasbands (10) nach dem Kantenschneideschritt ist, und $W_R$ (mm) die Breite des Harzfilms ist.

4. Verfahren zum Herstellen eines Glas-Harz-Verbunds (30) nach einem der Ansprüche 1 bis 3, wobei die Harzfilme (231) durch Heißsiegeln oder durch einen Klebstoff bzw. ein Haftmittel in dem Filmlaminierschritt gebondet werden.

## Revendications

1. Procédé de production d'un composite de résine de verre (30) qui comprend une étape de formation consistant à former du verre fondu (13) pour obtenir un ruban de verre (10), et
une étape de découpe de bord consistant à découper les deux bords dans le sens de la largeur du ruban de verre (10) après l'étape de formation, qui comprend en outre
une étape de formation de revêtement de résine consistant à faire passer le ruban de verre (10), après l'étape de découpe de bord, à travers une filière d'une extrudeuse de résine fondue pour appliquer une résine fondue sur ses surfaces principales et surfaces de bord afin de former un revêtement de résine, et/ou une étape de stratification de film consistant à mettre en sandwich le ruban de verre (10), après l'étape de découpe de bord, entre deux films de résine (231) plus larges que le ruban de verre (10) et coller les deux bords dans le sens de la largeur des films de résine (231) pour le recouvrir.

2. Procédé de production d'un composite de résine de verre (30) selon la revendication 1, dans lequel la viscosité de la résine fondue immédiatement avant l'extrusion de la filière de l'extrudeuse de résine fondue est de $10^{-1}$ Pa·s à $10^3$ Pa·s à une vitesse de cisaillement de 500 (1/s).

3. Procédé de production d'un composite de résine de verre (30) selon la revendication 1 ou 2, dans lequel $(W_R-W_G)/2 \geq T_G+0{,}1$ est satisfaite, où $W_G$ (mm) est la largeur et $T_G$ (mm) est l'épaisseur du ruban de verre (10) après l'étape de découpe de bord, et $W_R$ (mm) est la largeur du film de résine.

4. Procédé de production d'un composite de résine de verre (30) selon l'une quelconque des revendications 1 à 3, dans lequel les films de résine (231) sont collés dans l'étape de stratification de film par soudure à chaud ou par un adhésif.

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001097733 A
- JP 2001113631 A
- JP 2002534305 A

- JP 2007010834 A
- DE 10040640 A1
- JP 2008014430 A